# EUROPEAN PATENT APPLICATION

(11) **EP 1 329 152 A1**
(43) Date of publication of application: **23.07.2003**
(21) Application number: 02380031.1
(22) Date of filing: 08.02.2002
(51) Int. Cl.: A01G 9/02

(54) **Multiform modular plant pot with different modules combinable with other modules that are the same or similar, provided with automatic watering, water evacuation and lighting**

(30) Priority: 17.01.2002 ES 200200092
(71) Applicant: Joyru S.L., 28025 Madrid (ES)
(72) Inventor: Gonzalez Miguez, Jose, 28025 Madrid (ES)
(74) Representative: Urizar Anasagasti, José Antonio

(57) **Abstract**

The object of the present invention is related to a multiform modular plant pot with modules combinable with other modules that are the same or similar, provided with automatic watering, water evacuation and lighting consisting of a series of lengthwise modules with U-shaped cross-sections joined together with brackets and suitable parts until they fill the necessary space forming a single plant pot closed at its ends by a final bracket and held together with a suitable part.

## Description

### OBJECT OF THE INVENTION

The object of the present invention is related to a multiform modular plant pot with modules combinable with other modules that are the same or similar, provided with automatic watering, water evacuation and lighting consisting of a series of lengthwise modules with U-shaped cross-sections joined together with brackets and suitable parts until they fill the necessary space forming a single plant pot closed at its ends by a final bracket and held together with a suitable part.

### BACKGROUND OF THE INVENTION

Current plant pots for gardens, balconies, terraces, cottages, etc., which are prefabricated with different materials, especially plastic derivatives, have a series of drawbacks in common:
- each unit is an independent module that does not have the suitable shape nor size to cover a specific area or shape.
- they do not have any kind of individual watering system.
- several pots cannot be joined together to make a single one.
- they do not provide water evacuation above the basis level.
- they are not provided with built-in lighting to facilitate working in the evening or at nightfall, which are the best times for working in plant pots.

The kind of plant pot that the object of the invention is related to eliminates all of these drawbacks, since it is provided with a series of different modules, combinable with others that are the same or similar, that include automatic watering, water evacuation and lighting.

### DESCRIPTION OF THE INVENTION

The multiform modular plant pot with different modules combinable with other modules that are the same or similar, provided with automatic watering, water evacuation and lighting has been designed in order to avoid the aforementioned drawbacks.

The plant pot is made up of several modules made of plastic derivatives, although it can also be made of other materials; the modules are easily adaptable to any available shape of space.
The modules are:
- main module, or open-ended module with straight lengthwise axis.
- secondary module, or closed ended module with straight lengthwise axis.
- complementary module, or module with one open end and straight lengthwise axis.
- special modules, with slanted lengthwise axis forming 90°, 45° or 135° angles and for any extraordinary shape.

The modules are joined together to form a single plant pot by way of metal perimetral clasps, made of two parts (an outer and an inner part) with a rubber stopper to be situated between the external clasp and the module. The lower part of the lengthwise lateral face of the modules includes, near the bottom, a line of holes for evacuating the watering water as soon as it overflows the level that they are located at; these lateral holes, as well as maintaining dampness, facilitate easy and comfortable access for cleaning the drain, with a metal cleaning rod that starts on the outer lateral face of the module at the height of the evacuation hole, crosses the hole and stretches through the module to the other lateral face; allowing in this way the revolving movement of the rod to free earth or compost from the hole, obtaining efficient and permanent drainage and preventing it from being blocked and from incomplete evacuation.

Just below the level where the line of holes stops there are several tubular projections of the vertical axis located on the inner part of the wall of the modules that facilitate the optimal evacuation of water overflow. The inner tubular evacuation projections function as a support for the rest of the modules when piled one on top of the other, thus preventing the weight from resting on the sides of the modules and avoiding their deformation.

All plant pots include an automatic watering system made up of a main water supply pipe located on the outer part of the modules and supported by the module itself; from where the water is sent into the interior of the plant pot by way of connections that go through holes made in the lengthwise lateral faces of the modules; the connections, once inside the module, lead into a porous hose that waters all the areas of the plant pot equally by simply opening a valve located, external to the module, at the connections between the inner porous hose and the main outer pipe.

Optionally, at the ends of the external lateral faces of the complementary and special modules, electrical sockets with their corresponding plugs can be included, where the lighting and electrical tools can be plugged in; an adornment can also be added as an optional decorative element at the joining area between module where they do not need reinforcement and therefore the clasps or metal brackets are not put on.

By joining the main, secondary, complementary and special modules, the plant pot facilitates an arrangement with lengthwise axes in different shapes, as desired by the client.

Each module will have the projections needed in order to obtain appropriate support in case, upon joining them with clasps, the ends of the module where no clasps are located should be left without bases.

At the desired connection point, a lighting outlet or lamp can be included as desired, by simply using the connection screws of the clasps or metal brackets for coupling a metal support that will be used as a basis for the lamp. Said supporting basis or platform will be provided with two openings or slots that cross over one another, facilitating the screws that will firmly hold the lamp to be sent through them.

### DETAILED DESCRIPTION OF THE DIAGRAMS

In order to achieve a better understanding of the object of the present invention, a preferred practical embodiment of the object of the present invention is disclosed below, based on the attached figures.

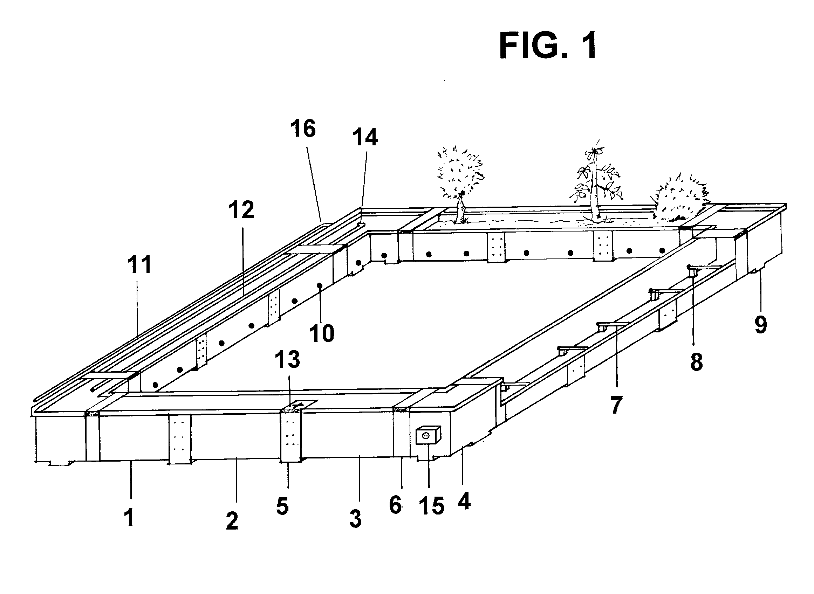

Figure 1: Perspective view of a multiform modular plant pot with modules combinable with other modules that are the same or similar, provided with automatic watering, water evacuation and lighting.

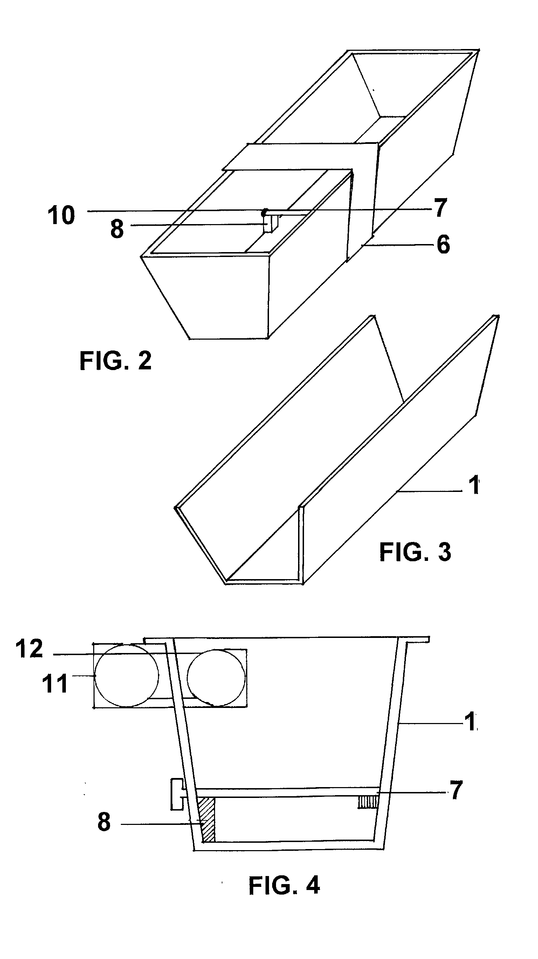

Figure 2: Perspective view of a module closed at both ends, or a secondary module.
Figure 3: Perspective view of a module open at one end, or a complementary module.
Figure 4: Elevation view of a cross-section of a module with automatic watering system.

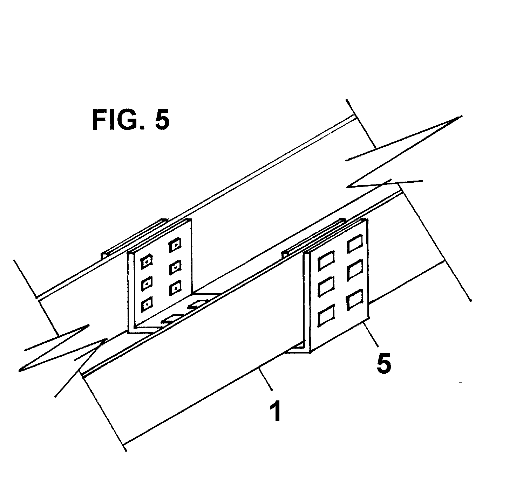

Figure 5: Perspective view of the brackets or metal clasps.

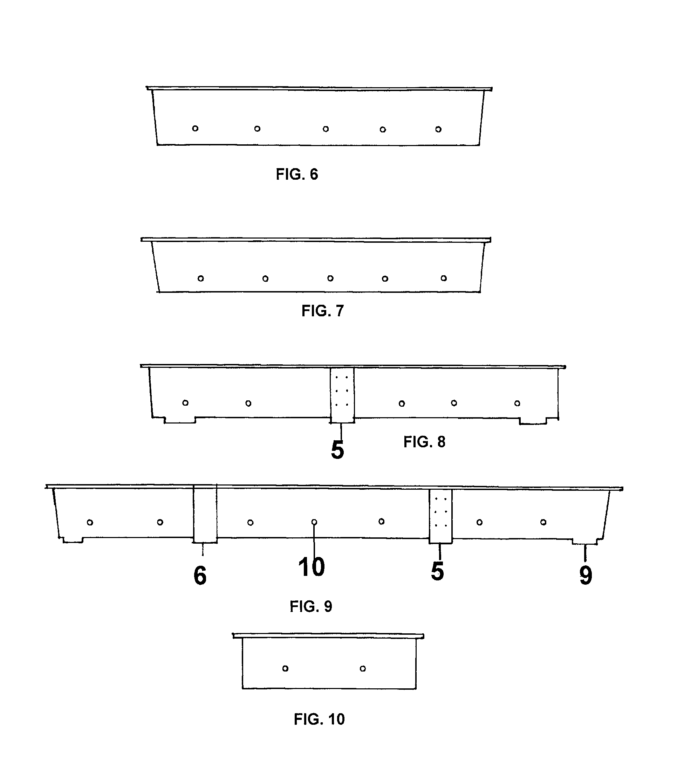

Figure 6: Front view of a module closed at the ends, or a secondary module.
Figure 7: Front view of a module open at the ends, or a main module.
Figure 8: Front view of two complementary modules joined together.
Figure 9: Front view of three modules joined together.
Figure 10: Front view of a special module with a lengthwise axis forming a 90° angle.

### PREFERRED EMBODIMENT OF THE INVENTION

Multiform modular plant pot combinable with other modules that are the same or different, provided with automatic watering, water evacuation and lighting consisting of a series of lengthwise modules with a U-shaped cross-section, which are: main (1), secondary (2) and complementary (3).

These modules are joined together by screwed-on clasps or perimetral metal brackets (5), and where no reinforcement is needed and therefore no brackets are attached, plastic decorations can be added (6).

The modules (1, 2, 3, 4) will include a metal cleaning rod (7). A hollow evacuation projection of the drainage system (8), a support projection (9) when necessary, the holes (10) of the evacuation system, and the main pipe (11) of the watering system that goes along the outside of the modules (1, 2, 3 and 4), the porous hose (12) of the watering system that goes along the inside of the modules (1, 2, 3 and 4) and optionally the metal support for the lamp (13) can be added.

The internal automatic watering system consists of a main water supply pipe (11) located on the outside of the modules (1, 2, 3 and 4) and supported by the modules itself (1, 2, 3 and 4) form where water is lead to the inside of the plant pot by way of holes (14) made in the modules (1, 2, 3 and 4), into connections that, once inside the module (1, 2, 3 and 4), lead into an inner porous hose (12), which waters all the areas of the plant pot equally by simply opening a valve.

A lighting point or lamp can be added, as desired by the user, at any of the clasps or perimetral metal brackets (5) by simply using the screws of the bracket connection in order to affix a metal support (13) that will be the basis for the lamp. Said basis or platform will be provided with two cuts or slots that cross one another, allowing the screws that will firmly hold the lamp to pass through them.

Along the exterior part of the modules (2, 3 and 4) at one end of its lengthwise lateral face, an electrical socket (15) may be situated.

On one of the lateral faces of the modules (1, 2, 3 and 4) there are several holes (10) about 5 cm from the bottom to evacuate the water that overflows the level of said holes; these lateral evacuation holes (10) will facilitate, as well as maintaining dampness, easy and comfortable access to cleaning the drain, with a metal cleaning rod (7) that is narrower than the hole (10) and that begins on a lateral face of the module (1, 2, 3 or 4) on the level of the evacuation hole (10), crosses through the evacuation hole (10), and stretches into the module (1, 2, 3 and 4) to the other lateral face; this facilitates, when the metal cleaning rod (7) is provided with rotational movement, freeing the evacuation hole (10) from earth or compost, achieving efficient drainage and permanently preventing its blockage and incomplete evacuation. Under each evacuation hole (10), a tubular projection (8) on the inside of the wall of the modules (1, 2, 3 and 4) facilitates improved evacuation of excess water. The inner tubular evacuation projections (8) function as a support for the rest of the plant pot when piled one on top of another, thus preventing weight from resting on the sides of the modules and their deformation.

The modules to be joined together (being main 1, complementary 2, secondary 3 or special 4) can be joined by arranging clasps or metal brackets (5) made up of two pieces, outer and inner, and also including rubber stoppers on the areas of the exterior where the clasps or metal brackets (5) are screwed onto the modules (1, 2, 3 and 4); which, when affixing one clasp to another and the rubber stopper between the outer clasp and the module (being 1, 2, 3 or 4) by way of screws (6 on each lengthwise lateral face and 6 on the bottom), facilitate secure sealing.

The modules (1, 2, 3 and 4) include holes where the screws for affixing the clasps or metal brackets (5) are to be attached.

Each module (1, 2, 3 and 4) includes at one end of one of its lengthwise lateral faces a hole (14) with a total diameter that facilitates the easy arrangement of the connections (16) between the porous inner hose (12) and the main outer tube (11), which in turn include a valve that will provide the necessary flow according to what is needed.

Each module (1, 2, 3 and 4) includes support projections (9) to achieve suitable support in case, when joined by clasps or metal brackets (5), the ends of the modules (1, 2, 3 and 4) should be left without support where there are no clasps or metal brackets (5).

Modules (1, 2, 3 and 4) will have a slight outward inclination on their lateral faces, thus forming an angle larger than 90° with the basis in order to facilitate better functioning of the modules (1, 2, 3 and 4) and better storage.

Adornments (6), made of either PVC or another resistant material, will be added at the union between the modules where no reinforcements need to be added such as clasps or metal brackets (5), thus facilitating use of the adornments (6) as simply decorative elements.

All of the above facilitates the modules (1, 2, 3 and 4) being joined together and thus being transformed into a larger plant pot, adjustable to any available space.

Having sufficiently disclosed the nature of the present invention, as well as a way of putting it into practice, we only need add that changes in its shape, materials and arrangement may be added in the whole or any of the parts that compose the invention, as long as said changes do not substantially alter the characteristics of the invention as claimed below.

## Claims

1. "Multiform modular plant pot with modules combinable with other modules that are the same or similar, provided with automatic watering, evacuation and lighting", **characterised in that** it is composed of several modules (1, 2, 3 and 4) with lengthwise axes in different shapes, which are joined together by way of clasps or metal brackets (5) in order to form a single, closed plant pot, the modules being provided with evacuation holes (10) located in their walls which allow for maintaining a determinate level of water in the plant pot, and with hollow projections (8) in the lower interior part of the walls of the modules (1, 2, 3 and 4), with metal cleaning rods (7) for the evacuation holes (10), with the automatic watering system consisting of an external water supply pipe (11), connections (16) that go through the external walls of the modules (1, 2, 3 and 4) by way of holes (14) and an internal porous hose (12), with supports for locating lighting elements (13), and with an electrical socket (15) for the power supply of said lighting and for connecting necessary electrical tools.

2. "Multiform modular plant pot with modules combinable with other modules that are the same or similar, provided with automatic watering, evacuation and lighting", according to the first claim, **characterised in that** modules 1, or main module, that has a straight lengthwise axis, has open ends, module 2 or secondary module that has a straight lengthwise axis, has closed ends, module 3 or complementary module that has a straight lengthwise axis has only one end open and module 4 or special module has an a slanted lengthwise axis forming a 90°, 45° or 135° angle and has open or closed ends in order to facilitate assembling the plant pots in any configuration, all of these modules having a U-shaped cross-section, slightly open, with a length of approximately between 70 and 100 cm and projections (9) for suitable support.

3. "Multiform modular plant pot with modules combinable with other modules that are the same or similar, provided with automatic watering, evacuation and lighting", according to the first claim, **characterised in that** the clasps or metal brackets (5) that serve to join modules (1, 2, 3 and 4) together are made up of two pieces, an inner and an outer piece, that are perimetrically situated in the interior and on the exterior of the module, a rubber stopper also being situated between the exterior piece and the module, being affixed to the outer piece - rubber stopper - module - inner piece by way of screws, which facilitates joining as many modules (1, 2, 3, and 4) as wished.

4. "Multiform modular plant pot with modules combinable with other modules that are the same or similar, provided with automatic watering, evacuation and lighting", according to the first claim, **characterised in that** the evacuation holes (10) are located on the lengthwise lateral walls at a height of 5 cm from the bottom and have a larger diameter than that of the metal cleaning rod (7), which facilitates maintaining a determinate level of water in the plant pot.

5. "Multiform modular plant pot with modules combinable with other modules that are the same or similar, provided with automatic watering, evacuation and lighting", according to the first claim, **characterised in that** the hollow, tubular-shaped projections (8) are located in the inner, lower part of the walls of the modules (1, 2, 3 and 4) and also facilitate evacuation by way of these hollow projections (8) of excess water, as well as serving as support for piling the modules on top of another and avoiding the deformation of the modules.

6. "Multiform modular plant pot with modules combinable with other modules that are the same or similar, provided with automatic watering, evacuation and lighting", according to the first claim, **characterised in that** the automatic watering system consists of an external water supply pipe (11), which will be supported, on the external lengthwise faces of the modules (1, 2, 3 and 4) by connections (16) that cross through the external wall of the modules (1, 2, 3 and 4) by way of holes (14) made in the external walls of the same modules and which connect the external water supply tube (11) with the internal porous hose (12) that has as its function to provide the necessary flow of water in the plant pot.

7. "Multiform modular plant pot with modules combinable with other modules that are the same or similar, provided with automatic watering, evacuation and lighting", according to the first claim, **characterised in that** the metal supports (13) for situating lighting elements are shaped suitably for coupling the outer pieces of the clasps or metal brackets (5) by way of screws.

8. "Multiform modular plant pot with modules combinable with other modules that are the same or similar, provided with automatic watering, evacuation and lighting", according to the first claim, **characterised in that** the electrical socket (15) located in the external area of the end of the modules (3 or 4) is used for lighting and for electrical tools.
